# FASCICULE DE BREVET EUROPEEN

(11) **EP 0 859 178 B1**
(45) Date de publication et mention de la délivrance du brevet: **15.05.2002**
(21) Numéro de dépôt: 98400365.7
(22) Date de dépôt: 16.02.1998
(51) Int. Cl.: F16K 31/04

(54) **Valve à tiroir à débit contrôlé**
Durchflussregelndes Schieberventil
Flow control sliding valve

(30) Priorité: 14.02.1997 FR 9701756
(43) Date de publication de la demande: 19.08.1998
(73) Titulaire: HYDROPERFECT INTERNATIONAL HPI, F-94430 Chennevieres Val de Marne (FR)
(72) Inventeur: Grattery, Didier, 41100 Vendôme (FR)
(74) Mandataire: Coester, Jacques Charles

(56) Documents cités:
- EP-A- 0 306 159
- CH-A- 660 512
- DE-A- 2 427 809
- DE-A- 4 423 313
- US-A- 3 976 279
- US-A- 4 742 989

## Description

L'invention concerne les valves à tiroir du type décrit dans le préambule de la revendication 1.

Ces valves sont utilisées dans les circuits hydrauliques et qui doivent permettre l'écoulement d'un flux contrôlé de fluide hydraulique, notamment lorsqu'il est recherché que l'on obtienne un débit de fluide proportionnel à une fonction déterminée.

L'utilisation de valves à débit proportionnel est en elle-même connue mais il a été constaté que ces valves, qui sont constituées essentiellement par un tiroir déplaçable à l'intérieur d'un corps de valve présentent toujours des fuites qui nuisent à la précision d'un système hydraulique.

Ces fuites sont dues évidemment aux différences de pression qui peuvent exister entre les circuits haute et basse pression et ces fuites demeurent bien que les tiroirs soient pratiquement, dans tous les cas, munis de joints d'étanchéité, notamment de joints toriques.

Les fuites sont particulièrement nuisibles lorsqu'un circuit haute pression doit être obturé et le demeurer. En effet, une fuite, même minime, peut progressivement provoquer le déplacement d'organes commandés par exemple des vérins, des pompes, etc... dont le déplacement risque d'introduire des inconvénients graves.

L'invention remédie aux inconvénients ci-dessus en permettant de réaliser des valves parfaitement étanches, en particulier lorsqu'elles sont au repos et, en outre, de permettre un asservissement très précis de la valve.

Pour atteindre ce but, la valve à tiroir à débit contrôlé selon l'invention comporte les caractéristiques énoncées dans la partie caractérisante de la revendication 1. D'autres caractéristiques de l'invention sont décrites dans les revendications dépendantes.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une élévation, partie en coupe, d'un premier mode de réalisation d'une électrovanne, illustrée en positions ouverte et fermée, selon l'invention.

La fig. 2 est une coupe partielle de la valve d'une électro-vanne suivant une variante de la fig. 1 et également représentée en positions ouverte et fermée.

La fig. 3 est une vue en élévation en coupe axiale d'un second mode de réalisation d'une électrovanne selon l'invention ; et

La fig. 4 montre à plus grande échelle le détail indiqué en IV de la fig. 3.

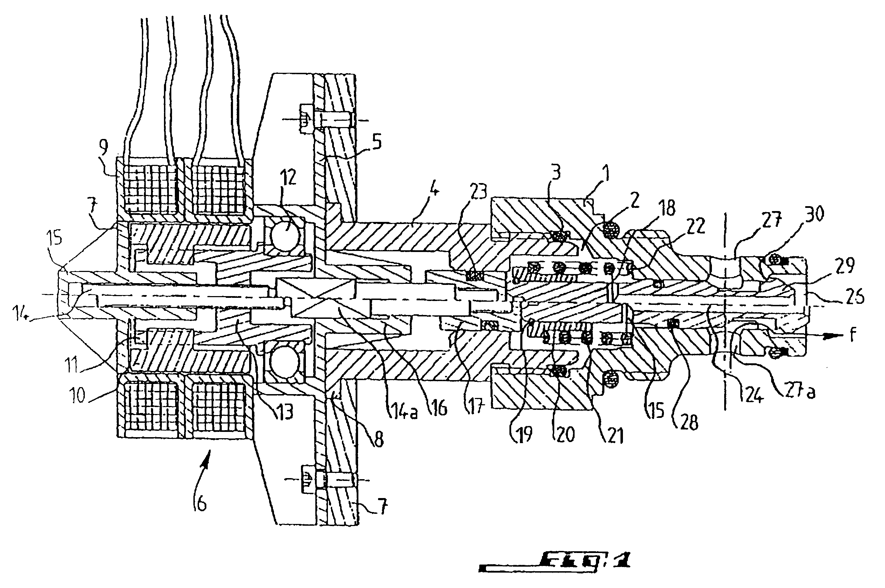

La fig. 1 illustre un corps de valve 1 délimitant une chambre interne 2 isolée par un joint 3 prenant appui contre une cartouche 4 assurant la liaison entre le corps de valve 1 et le stator 5 d'un moteur pas à pas rotatif 6.

La figure montre que la cartouche 4 est fixée au stator 5 par un plateau 7 serré contre un épaulement 8 de la cartouche 4. Le stator 5 supporte des enroulements inducteurs 9 pour la commande d'un induit 10 en prise avec un barillet 11 porté par un palier 12.

Le barillet 11 comporte un anneau taraudé 13 monté sur une vis 14 engagée dans un fourreau 15 pour y être guidé. La vis est guidée axialement dans un manchon 16 du stator de façon à pouvoir coulisser axialement sans pouvoir tourner. A cette fin, la vis présente, par exemple, une partie polygonale 14a de forme correspondant à l'alésage interne du manchon 16.

L'extrémité de la vis est engagée dans un accouplement tubulaire 17 constitué par une douille qui prend appui contre un tiroir 18 pouvant coulisser dans le corps de valve 1. Le tiroir 18 est muni d'une butée 19 pour un fourreau 20 poussé par un ressort 21 prenant appui, par ailleurs, contre un épaulement 22 du corps de valve.

L'accouplement tubulaire 17 est relié de façon étanche à la cartouche 4 par un joint torique 23 de manière que du fluide hydraulique qui est amené dans le corps de valve ne puisse pas pénétrer à l'intérieur de la cartouche 4.

Le tiroir 18 présente un canal axial 24 communiquant avec la chambre interne 2 par des lumières radiales 25. Le canal 24 communique, par ailleurs, avec le circuit basse pression 26, par exemple une bâche réceptrice de fluide hydraulique.

La figure montre que le tiroir 18 se trouve en regard de lumières 27, 27a pratiquées dans le corps de valve 1 et communiquant avec un circuit haute pression d'une installation hydraulique quelconque.

Pour empêcher ou limiter des fuites entre les lumières 27, 27a contenant du fluide sous haute pression et la chambre interne 2, le tiroir 18 est muni d'au moins un joint torique 28.

Outre ce qui précède, le tiroir 18 comporte ou délimite, à son extrémité se trouvant dans le circuit basse pression 26 un clapet 29 correspondant à un siège 30 que forme l'extrémité du corps de valve 1. Ce clapet 29 est réalisé à l'extrémité du tiroir sous forme d'une partie radialement en saillie dont la face arrière détournée de l'extrémité libre du clapet est destinée à prendre appui sur le siège de valve 30. On constate en outre que le tiroir comprend en arrière du clapet une chambre annulaire 33 qui communique avec les lumières 27, 27a.

La valve peut fonctionner bidirectionnellement, c'est-à-dire dans le sens des flèches f et f'. La moitié inférieure du dessin montre le clapet 29 en position ouverte. On constate que le fluide du circuit haute pression peut s'écouler suivant la flèche f en passant par les lumières 27, 27a à la périphérie du tiroir 18 pour atteindre le circuit basse pression 26. Il peut aussi s'écouler dans la direction de la flèche f'. Le canal axial 24 fait alors que le tiroir est équilibré à l'état de repos quand l'écoulement du fluide se fait dans le sens de la flèche f'. Dans ce cas, le joint thorique 23 assure l'étanchéité en direction du moteur pas à pas.

Le débit du fluide peut être réglé suivant une fonction quelconque en déplaçant plus ou moins le tiroir 18 au moyen du moteur pas à pas 6. En effet, comme l'illustre le dessin, lorsque les inducteurs 9 sont alimentés, cela a pour effet d'entraîner en rotation l'induit 10 qui entraîne, en conséquence, l'anneau taraudé 13 autour de la vis 14.

La vis 14 est, par conséquent, déplacée axialement puisqu'elle est empêchée de tourner par la partie polygonale 14a. Le mouvement axial de la vis 14 est transmis à l'accouplement tubulaire 17 contre lequel le tiroir 18 est maintenu appliqué par le ressort 21.

Lorsque le circuit haute pression doit être isolé du circuit basse pression, le moteur pas à pas est entraîné dans le sens opposé de façon que la vis 14 soit amenée à sa position de retrait maximum.

Le mouvement de la vis et de l'accouplement 17 est suivi par le tiroir 18 qui est constamment poussé par le ressort 21 jusqu'au moment où le clapet 29 est appliqué sur son siège 30.

Une étanchéité absolue est ainsi obtenue et toute fuite de fluie est empêchée grâce au joint thorique 28 et au joint thorique 23 selon que le fluide s'écoule dans les directions f ou f'.

En outre, la commande par un moteur pas à pas rotatif du genre de celui décrit permet d'assurer un réglage très précis du déplacement du tiroir 18 et, par conséquent, un réglage également très précis de la quantité de fluide devant s'écouler depuis les lumières 27, 27a vers le circuit basse pression 26.

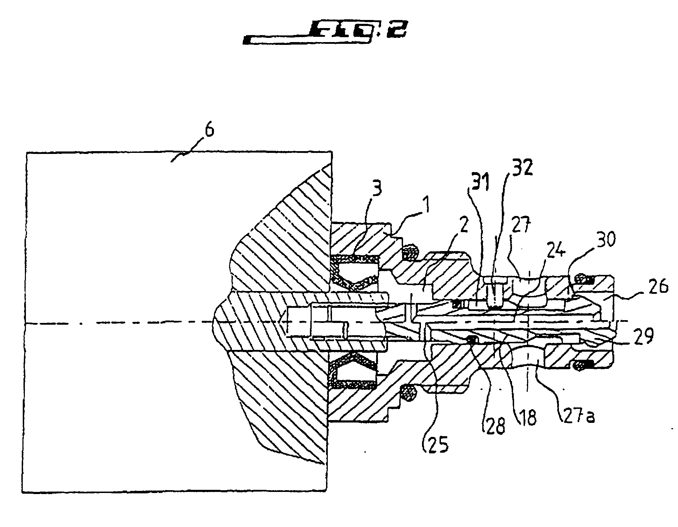

La fig. 2 illustre une légère variante suivant laquelle le tiroir 18 présente, entre la lumière 27 et le joint 28, une rainure 31 dans laquelle est engagé un doigt 32.

Dans cette réalisation, le tiroir est guidé axialement par le doigt 32 qui forme également une butée limitant sa course dans le sens correspondant à la pleine ouverture du clapet 29.

Cette réalisation permet de simplifier la construction de la vis 14 et de la partie polygonale 14a qui peut être supprimée, le guidage axial étant simplement assuré par le doigt 32.

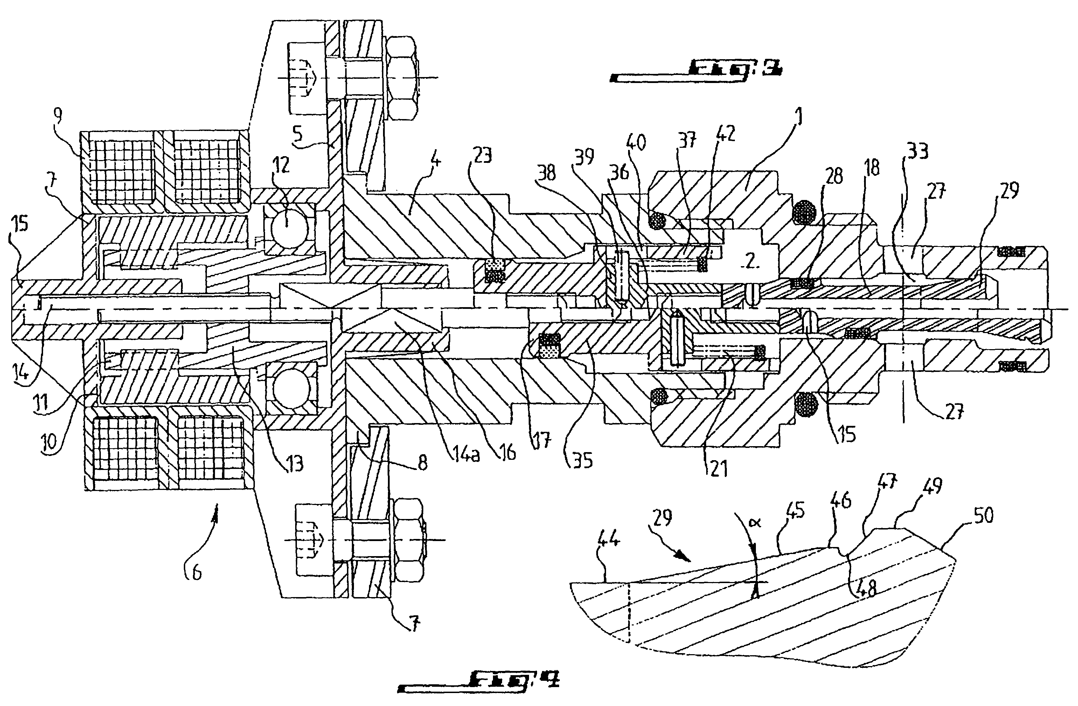

En se référant à la Fig. 3 on décrit ci-après un second mode de réalisation de l'invention. Sur cette figure on utilise les mêmes numéros de référence pour des parties ou pièces identiques ou similaires à celles représentées sur la Fig. 1.

La particularité du mode de réalisation selon la Fig. 3, par rapport à celui de la Fig. 1 réside notamment dans le fait que la fonction du ressort 21 se limite seulement à assurer une certaine pression d'application du clapet 29 sur le siège 30 à l'état de repos de la valve.

A cette fin on a axialement interposé par rapport à la figure 1 entre le tiroir 18 et l'accouplement tubulaire désigné maintenant par le numéro 35 au lieu de 17 comme sur la Fig. 1 une pièce tubulaire intermédiaire 36 qui est cependant axialement solidaire, par vissage, du tiroir. L'accouplement 35 comporte, suplémentairement à l'accouplement 17 de la Fig. 1, un prolongement tubulaire 37 du côté du tiroir 17 dont le diamètre extérieur est légèrement inférieur au diamètre inférieur de la cartouche au niveau de la chambre 2. La pièce intermédiaire 36 est axialement engagée dans le prolongement annulaire 37 et comporte à son extrémité adjacente à l'accouplement 17 un épaulement annulaire cylindrique 38. Dans la face périphérique de celui-ci est placée une goupille radiale 39 qui fait radialement saillie vers l'extérieur sur une longueur permettant à son extrémité de s'engager dans une fente de guidage axiale 40 pratiquée dans le prolongement tubulaire 37. L'accouplement 35 et la pièce intermédiaire 37 étant axialement mobiles, l'un indépendamment de l'autre, la goupille radiale 37 en s'engageant dans la rainure 40 constitue une butée limitant le déplacement de la pièce 37 et du tiroir par rapport à l'accouplement 35.

Le ressort 21 connu par la Fig. 1 est maintenant interposé entre l'épaulement 38 de la pièce intermédiaire 37 et une bague d'appui 42 tel qu'un circlip monté sur la face interne du prolongement annulaire 37.

On comprend, que dans ces conditions constructives, le ressort 21 est sans effet dès que la face frontale avant de l'accouplement 35 vient en contact avec la face frontale arrière de la pièce intermédiaire 36, sous l'effet du moteur pas à pas agissant dans la direction d'ouverture de la valve. Par contre, lors de la fermeture de la valve, le ressort assure la solidarité axiale de l'accouplement 35 et de l'ensemble formé par le tiroir 18 et la pièce intermédiaire 36. Le ressort garantit ensuite la fermeture sûre du clapet en assurant, par une légère compression, une application sous pression du clapet 29 contre son siège 30. D'autre part, du fait que le moteur n'a pas à vaincre le ressort lors de l'ouverture du clapet, le temps de réponse de la valve est grandement réduit et la force du moteur peut être relativement faible et constante.

En se référant à la Fig. 4 on décrit un mode de réalisation avantageux du clapet 29. Celui-ci comporte alors successivement à partir du corps cylindrique du tiroir 18 indiqué en 44, une portion conique 45 allant en s'élargissant selon un angle en direction de l'extrémité du tiroir, une portion 46 cylindrique de faible longueur, une face 47 conique fortement radialement en saillie et constituant la face d'appui du clapet sur le siège 30 et séparée de la portion cylindrique 46 par une gorge 48, puis une portion cylindrique 49 et une face d'extrémité conique allant en se rétrécissant.

Cette configuration du clapet assure la proportionnalité du débit de la valve et une parfaite étanchéité au niveau du clapet.

Elle permet encore une variation du débit par simple variation de l'angle d'inclinaison α de la face conique (45) du tiroir, ce qui peut être réalisé par simple changement de tiroir.

## Revendications

1. Valve à tiroir à débit contrôlé, comprenant un tiroir (18) axialement mobile dans un corps de valve (1) et commandé à l'une de ses extrémités axiales par un moteur pas à pas, le tiroir (18) comportant une chambre annulaire (33) située entre ses deux extrémités axiales et communiquant avec un premier dispositif hydraulique par l'intermédiaire de lumières (27, 27a) pratiquées dans le corps de vanne (1), d'une part, et avec un deuxième dispositif hydraulique, d'autre part, lorsque le clapet occupe sa position d'ouverture, **caractérisée en ce que** le tiroir porte à son extrémité axiale opposée à celle commandée par le moteur un clapet (29) maintenu appliqué contre un siège (30), porté par le corps de valve, en position de repos et déplaçable axialement par rapport à ce siège d'une mesure correspondant à celle qui est imprimée au tiroir par le moteur pas à pas.

2. Valve suivant la revendication 1, **caractérisée en ce que** le moteur pas à pas est un moteur pas à pas rotatif.

3. Valve suivant l'une des revendications 1 et 2, **caractérisée en ce que** le tiroir est relié directement à la partie menée du moteur pas à pas.

4. Valve suivant la revendication 3, **caractérisée en ce que** le tiroir est maintenu en appui contre la partie mené du moteur pas à pas par un ressort (21).

5. Valve suivant l'une des revendications 1 à 4, **caractérisée en ce que** le moteur pas à pas comporte un rotor pour l'entraînement, dans un sens ou dans l'autre, d'une vis (14) agissant directement contre le tiroir (18).

6. Valve suivant l'une des revendications 1 à 5, **caractérisée en ce que** le tiroir est guidé axialement par une partie polygonale (14a).

7. Valve suivant l'une des revendications 1 à 4, **caractérisée en ce que** le tiroir est guidé axialement par un doigt (37).

8. Valve selon l'une des revendications 1 à 7, **caractérisée en ce qu'**un joint d'étanchéité (28) est interposé entre le tiroir (18) et le corps de vanne (1), en arrière de ladite chambre prévue dans le tiroir et desdites lumières (27, 27a).

9. Valve selon l'une des revendications 1 à 9, **caractérisée en ce qu'**un canal axial (24) est prévu dans le tiroir (18) qui s'ouvre vers l'extérieur du côté clapet et communique avec une chambre interne (2) située dans le corps de valve (1) de façon à permettre à la valve un fonctionnement bi-directionnel, avec le côté haute pression se trouvant du coté desdites lumières (27, 27a) ou devant l'extrémité de clapet du tiroir, le canal et ladite chambre assurant l'état d'équilibre du tiroir à l'état de fermeture du clapet.

10. Valve selon la revendication 9, **caractérisée en ce que** la chambre interne (2) est isolée en direction du moteur pas à pas (6) par un joint d'étanchéité (23).

11. Valve selon l'une des revendications précédentes, **caractérisée en ce que** le clapet (29) comporte une face arrière (47) radialement en saillie vers l'extérieur par laquelle il prend appui sur le siège de valve (30).

12. Valve selon la revendication 11, **caractérisée en ce que** le clapet comporte en arrière de la face d'appui (47), dans la direction des lumières (27, 27a) une face conique (45) dont l'angle α détermine le débit du fluide.

13. Valve selon la revendication 12, **caractérisée en ce que** le débit de la valve est variable par utilisation de tiroirs d'angles α différents.

14. Valve selon l'une des revendications précédentes, **caractérisée en ce qu'**un ressort (21) est axialement interposé entre le tiroir (18) et une pièce d'accouplement (35) du tiroir au dispositif de déplacement comportant le moteur pas à pas, qui est disposé de façon à assurer une application pressée du clapet (29) sur son siège (30) mais est sans effet au cours du déplacement du tiroir (18).

## Claims

1. Valve with controlled flow slide valve including a slide valve (18) axially mobile in a valve body (1) and controlled at one of its axial extremities by a step motor, the slide valve (18) including an annular chamber (33) situated between its two axial extremities and communicating firstly with a first hydraulic device by means of apertures (27, 27a) made in the valve body (1), and secondly with a second hydraulic device when the clack valve occupies its opening position, **characterised in that** the slide valve bears at its axial extremity opposite the one controlled by the motor a clack valve (29) kept applied against a seat (30) borne by the valve body in an idle position and able to be moved with respect to this seat by a measurement corresponding to the one transmitted to the slide valve by the step motor.

2. Valve according to claim 1, **characterised in that** the step motor is a rotary step motor.

3. Valve according to claim 1 or 2, **characterised in that** the slide valve is directly connected to the driven portion of the step motor.

4. Valve according to claim 3, **characterised in that** the slide valve is kept in support against the driven portion of the step motor by a spring (21).

5. Valve according to one of claims 1 to 4, **characterised in that** the step motor comprises a rotor for driving in either direction a screw (14) acting directly against the slide valve (18).

6. Valve according to one of claims 1 to 5, **characterised in that** the slide valve is axially guided by a polygonal portion (14a).

7. Valve according to one of claims 1 to 4, **characterised in that** the drawer is guided axially by a finger (37).

8. Valve according to one of claims 1 to 7, **characterised in that** a gasket (28) is inserted between the drawer (18) and the valve body (1) behind said chamber provided in the drawer and said apertures (27, 27a)

9. Valve according to one of claims 1 to 9, **characterised in that** an axial channel (24) is provided in the drawer (18) which opens towards the outside of the valve side and communicates with an internal chamber (2) situated in the valve body (1) so as to enable the valve to function bi-directionally with the high pressure side being situated on the side of said apertures (27, 27a) or in front of the valve extremity of the drawer, the channel and said chamber ensuring the state of balance of the drawer when the valve is closed.

10. Valve according to claim 9, **characterised in that** the internal chamber (2) is isolated from the step motor (6) by a gasket (23).

11. Valve according to one of the preceding claims, **characterised in that** the clack valve (29) comprises a rear face (47) projecting radially towards the outside by which it takes support on the valve seat (30).

12. Valve according to claim 11, **characterised in that** the clack valve comprises at the rear of the support face (47) in the direction of the apertures (27, 27a) a conical face (45) whose angle α determines the flow of the fluid.

13. Valve according to claim 12, **characterised in that** the flow from the valve varies via the use of drawers of different angles α.

14. Valve according to one of the preceding claims, **characterised in that** a spring (21) is axially inserted between the drawer (18) and a piece (35) for coupling the drawer to the displacement device comprising the step motor arranged is such a way so as to ensure the clack valve (29) is pressed on its seat (30) but is ineffective during movement of the drawer (18).

## Patentansprüche

1. Durchflussregelndes Schieberventil mit einem axial in einem Ventilkörper (1) mobilen und an einem seiner axialen Enden durch einen Schrittschaltermotor gesteuerten Schieber (18), wobei der Schieber (18) eine ringförmige Kammer (33) umfasst, die sich zwischen seinen zwei axialen Enden befindet und mit einer ersten hydraulischen Vorrichtung mittels in den Ventilkörper (1) praktizierten Öffnungen (27, 27a) einerseits kommuniziert und mit einer zweiten hydraulischen Vorrichtung andererseits, wenn die Klappe ihre geöffnete Position einnimmt, **dadurch gekennzeichnet, dass** die Klappe an ihrem dem gegenüber vom Motor gesteuerten axialen Ende eine Klappe (29) trägt, die gegen einen Sitz (30) angewendet gehalten wird, der in Ruhestellung durch den Ventilkörper getragen wird und im Verhältnis zu diesem Sitz axial um ein Maß verschiebbar ist, das dem entspricht, das vom Schrittschaltmotor auf dem Schieber aufgedruckt ist.

2. Ventil gemäß Anspruch 1, **dadurch gekennzeichnet, dass** der Schrittschaltmotor ein Motor rotierender Schrittschaltmotor ist.

3. Ventil gemäß Anspruch 1 und 2, **dadurch gekennzeichnet, dass** der Schieber direkt mit dem vom Schrittschaltmotor geführten Teil verbunden ist.

4. Ventil gemäß Anspruch 3, **dadurch gekennzeichnet, dass** der Schieber durch eine Feder (21) aufliegend gegen das vom Schrittschaltmotor geführte Teil gehalten wird.

5. Ventil gemäß Anspruch 1 bis 4, **dadurch gekennzeichnet, dass** der Schrittschaltmotor einen Rotor zum Antrieb einer direkt gegen den Schieber (18) wirkenden Schraube (14) in der einen oder der anderen Richtung umfasst.

6. Ventil gemäß Anspruch 1 bis 5, **dadurch gekennzeichnet, dass** der Schieber axial durch einen polygonalen Teil (14a) geführt wird.

7. Ventil gemäß Anspruch 1 bis 4, **dadurch gekennzeichnet, dass** der Schieber axial durch einen Finger (37) geführt wird.

8. Ventil gemäß Anspruch 1 bis 7, **dadurch gekennzeichnet, dass** ein Dichtungsring (28) zwischen dem Schieber (18) und dem Ventilkörper (1) hinter besagter, im Schieber vorgesehener Kammer und besagten Öffnungen (27, 27a) zwischengeschaltet ist.

9. Ventil gemäß Anspruch 1 bis 9, **dadurch gekennzeichnet, dass** ein axialer Kanal (24) im Schieber (18) vorgesehen ist, der sich nach außen auf der Seite der Klappe öffnet und mit einer internen Kammer (2) kommuniziert, die sich derart im Ventilkörper (1) befindet, dass dem Ventil ein Funktionieren in zwei Richtungen ermöglicht wird, wobei sich die Hochdruckseite auf der Seite besagter Öffnungen (27, 27a) oder vor dem Ende der Klappe des Schiebers befindet, wobei der Kanal und besagte Kammer den Gleichgewichtszustand des Schiebers im geschlossenen Zustand der Klappe gewährleisten.

10. Ventil gemäß Anspruch 9, **dadurch gekennzeichnet, dass** die interne Kammer (2) in Richtung des Schrittschaltmotors (6) durch einen Dichtungsring (23) isoliert ist.

11. Ventil gemäß einem der vorgenannten Ansprüche, **dadurch gekennzeichnet, dass** die Klappe (29) eine radial nach außen hervorstehende hintere Seite (47) umfasst, durch die sie auf dem Sitz des Ventils (30) aufliegt.

12. Ventil gemäß Anspruch 11, **dadurch gekennzeichnet, dass** die Klappe hinter der Stützseite (47) in Richtung der Öffnungen (27, 27a) eine konische Seite (45) umfasst, deren Winkel α den Durchsatz des Fluids bestimmt.

13. Ventil gemäß Anspruch 12, **dadurch gekennzeichnet, dass** der Durchsatz des Ventils durch den Einsatz verschiedener Winkel α des Schiebers variabel ist.

14. Ventil gemäß einem der vorgenannten Ansprüche, **dadurch gekennzeichnet, dass** eine Feder (21) axial zwischen dem Schieber (18) und einem Kopplungsstück (35) des Schiebers an der Verschiebevorrichtung zwischengeschaltet ist, die den Schaltschrittmotor umfasst, der derart angeordnet ist, dass eine gedrückte Anwendung der Klappe (29) auf ihrem Sitz (30) gewährleistet wird, die jedoch im Lauf der Verschiebung des Schiebers (18) ohne Wirkung ist.
